# EUROPEAN PATENT APPLICATION

(11) **EP 3 412 897 A1**
(43) Date of publication of application: **12.12.2018**
(21) Application number: 17766651.8
(22) Date of filing: 14.03.2017
(51) Int. Cl.: F02D 13/02, F01L 13/00

(54) **ENGINE CONTROL DEVICE**

(30) Priority: 14.03.2016 JP 2016050045
(71) Applicant: Mazda Motor Corporation, Aki-gun Hiroshima 730-8670 (JP)
(72) Inventor: SUEOKA Masanari, Aki-gun Hiroshima 730-8670 (JP); TAKAHASHI Toshiaki, Aki-gun Hiroshima 730-8670 (JP); HIDAKA Masatoshi, Aki-gun Hiroshima 730-8670 (JP); HASHIGUCHI Tadasu, Aki-gun Hiroshima 730-8670 (JP)
(74) Representative: Thoma, Michael
(86) International application number: PCT/JP2017/010094
(87) International publication number: WO 2017/159652

(57) **Abstract**

A engine control device includes an variable exhaust valve mechanism 72 which varies an opening and closing timing of an exhaust valve 22, and a PCM 10 which controls the variable exhaust valve mechanism 72 such that the opening and closing timing of the exhaust valve 22 is varied, wherein the variable exhaust valve mechanism 72 is configured such that a lift amount of the exhaust valve 22 becomes smaller as a retarded degree of the valve opening timing increases, and the PCM 10 is configured to set a maximum retarded valve opening timing in an exhaust stroke based on the lift amount at an exhaust top dead center, and to control the variable exhaust valve mechanism 72 so as to open the exhaust valve 22 in advance of the maximum retarded valve opening timing.

## Description

### TECHNICAL FIELD

The present invention relates to an engine control device, and more particularly to an engine control device having cylinders each of which is provided with intake valves for introducing intake gas into the cylinder, and exhaust valves for discharging exhaust gas from the cylinder.

### BACKGROUND ART

Conventionally, a variable valve mechanism is known which varies the opening and closing timing and/or the lift amount of an exhaust valve or an intake valve provided to a cylinder. For example, Patent Document 1 describes a technique relating to an engine system provided with a variable valve mechanism which varies the opening and closing timing of the exhaust valve, wherein the lower the engine speed, the more a valve opening timing of the exhaust valve is retarded by a variable valve mechanism thus suppressing a backflow of air supplied to an exhaust passage to a cylinder when the engine rotates at low rpm.

### CITATION LIST

### [Patent Document]

Patent Document 1: Japanese Patent Laid-Open No. 2010-185301

### SUMMARY OF INVENTION

### [Technical Problem]

It is considered that when the engine rotates at high rpm, causing the valve opening timing of the exhaust valve to be advanced by the variable valve mechanism with respect to the exhaust bottom dead center can reduce a so-called pumping loss. On the other hand, it is considered that when the engine rotates at low rpm, causing the valve opening timing of the exhaust valve to be retarded to the vicinity of the exhaust bottom dead center by the variable valve mechanism can enhance the expansion ratio in the cylinder.

Conventionally, the variable valve mechanism is known which has characteristics where retarding the valve opening timing of the exhaust valve reduces the lift amount. Assume the case where such the variable valve mechanism is applied to the exhaust valve. In such a case, if the valve opening timing of the exhaust valve is excessively retarded so as to enhance the expansion ratio while the engine rotates at low rpm, the lift amount (the lift amount determining the opening area of the exhaust valve) of the exhaust valve at the exhaust top dead center is remarkably reduced. In the worst case, the lift amount of the exhaust valve at the exhaust top dead center becomes zero, that is, the exhaust valve assumes the fully closed state. When the lift amount of the exhaust valve at the exhaust top dead center is remarkably reduced as described above, exhaust gas is not appropriately discharged from the cylinder thus increasing the internal pressure of the cylinder so that loss (pumping loss) caused by exhaust gas occurs.

The present invention has been made to solve the above-mentioned problems of the conventional technique, and it is an object of the present invention to provide an engine control device where a variable valve mechanism is applied to an exhaust valve, wherein a lift amount of an exhaust valve at an exhaust top dead center is ensured so that loss caused by exhaust gas can be appropriately suppressed.

### [Solution to Technical Problem]

To achieve the above-mentioned object, the present invention is directed to an engine control device having a cylinder provided with an intake valve for introducing an intake gas into the cylinder, and an exhaust valve for discharging exhaust gas from the cylinder, the engine control device including: a variable valve mechanism configured to move the exhaust valve, and to vary an opening and closing timing of the exhaust valve; and a control device configured to control the variable valve mechanism such that the opening and closing timing of the exhaust valve is varied, wherein the variable valve mechanism is configured such that a lift amount of the exhaust valve becomes smaller as a retarded degree of the valve opening timing of the exhaust valve with respect to a predetermined reference timing increases, and wherein the control device is configured, based on a lift amount of the exhaust valve at an exhaust top dead center, to set a maximum retarded valve opening timing which is a timing at which the valve opening timing of the exhaust valve in an exhaust stroke is retarded to a maximum by the variable valve mechanism, and to control the variable valve mechanism so as to open the exhaust valve in advance of the maximum retarded valve opening timing.

According to the present invention having such a configuration, the maximum retarded valve opening timing of the exhaust valve is set based on the lift amount of the exhaust valve at the exhaust top dead center, and the variable valve mechanism is controlled so as to cause the exhaust valve to be opened at the timing on the advanced side of the maximum retarded valve opening timing. Accordingly, the lift amount of the exhaust valve at the exhaust top dead center can be appropriately ensured and hence, loss (pumping loss) caused by exhaust gas can be suppressed. Therefore, when the engine speed (the number of revolutions of engine) is low, the valve opening timing of the exhaust valve can be retarded using an appropriate maximum retarded valve opening timing as the limitation. For this reason, the lift amount of the exhaust valve at the exhaust top dead center can be ensured thus suppressing loss caused by exhaust gas, and an expansion ratio can be improved. Basically, the above variable valve mechanism in the present invention corresponds to a variable valve timing mechanism.

In the present invention, it is preferable that the control device is configured to set the maximum retarded valve opening timing such that the lift amount of the exhaust valve at the exhaust top dead center does not become zero.

According to the present invention having such a configuration, the maximum retarded valve opening timing is set such that the exhaust valve assumes at least an open state at the exhaust top dead center. Accordingly, the lift amount of the exhaust valve at the exhaust top dead center can be reliably ensured.

In the present invention, it is preferable that the control device is configured to set the maximum retarded valve opening timing such that the lift amount of the exhaust valve at the exhaust top dead center becomes a predetermined amount or more.

According to the present invention having such a configuration, the desired lift amount or greater of the exhaust valve at the exhaust top dead center is ensured and hence, loss caused by exhaust gas can be effectively suppressed.

In the present invention, it is preferable that he control device is configured to advance the maximum retarded valve opening timing as engine speed increases.

According to the present invention having such a configuration, the maximum retarded valve opening timing of the exhaust valve is set more toward the advanced side as engine speed increases so as to increase the lift amount of the exhaust valve at the exhaust top dead center. Accordingly, exhaust gas which is increased in amount with an increase in engine speed can be appropriately discharged from the exhaust valve and hence, loss caused by exhaust gas can be suppressed.

In the present invention, it is preferable that the control device is configured to control the variable valve mechanism such that the valve opening timing of the exhaust valve is advanced as engine speed increases and the valve opening timing of the exhaust valve is retarded as engine speed decreases.

According to the present invention having such a configuration, when the engine rotates at low rpm, an expansion ratio can be appropriately enhanced. When the engine rotates at high rpm, pumping loss can be appropriately reduced. Accordingly, fuel economy can be enhanced over the range from low rpm to high rpm of the engine.

In the present invention, it is preferable that the variable valve mechanism includes: a cam configured to rotate in synchronization with a rotation of a crankshaft; a pressure chamber filled with an engine oil, an oil pressure of the engine oil in the pressure chamber varying with a motion of the cam; and a hydraulic valve connected to the pressure chamber, an opening and closing of the hydraulic valve adjusting the oil pressure which acts on the exhaust valve, wherein, when the cam operates so as to increase the oil pressure in the pressure chamber, the control device is configured to perform a control for switching the hydraulic valve between an open state and a closed state so as to cause the oil pressure in the pressure chamber to act on the exhaust valve and thereby to open the exhaust valve, and the control device is configured to control a timing at which the hydraulic valve is switched between the open state and the closed state and thereby to vary the opening and closing timing of the exhaust valve.

According to the present invention having such a configuration, the variable valve mechanism is adopted where oil pressure of engine oil in the pressure chamber is varied using the cam which rotates in synchronization with rotation of the crankshaft, and the hydraulic valve is controlled so as to cause the oil pressure in the pressure chamber to act on the exhaust valve thus opening the exhaust valve. Accordingly, an opening and closing timing of the exhaust valve can be varied with the simple configuration.

### [Effect of Invention]

According to an engine control device of the present invention, in an engine where the variable valve mechanism is applied to an exhaust valve, the lift amount of the exhaust valve at the exhaust top dead center is ensured so that loss caused by exhaust gas can be appropriately suppressed.

### BRIEF DESCRIPTION OF DRAWINGS

FIG. 1 is a schematic configuration diagram of an engine to which an engine control device according to an embodiment of the present invention is applied.
FIG. 2 is a schematic side view of a variable exhaust valve mechanism which is applied to an exhaust valve of the engine according to the embodiment of the present invention.
FIG. 3 is a block diagram showing an electrical configuration relating to the engine control device according to the embodiment of the present invention.
FIG. 4 is an explanatory view of an operation region of the engine according to the embodiment of the present invention.
FIG. 5 is an explanatory view of a basic motion of an intake valve and the exhaust valve in a first operation region according to the embodiment of the present invention.
FIG. 6 is an explanatory view of characteristics of the variable exhaust valve mechanism according to the embodiment of the present invention.
FIG. 7 is an explanatory view of variation in lift amount of the exhaust valve at an exhaust top dead center when a valve opening timing of the exhaust valve is retarded by the variable exhaust valve mechanism.
FIG. 8 is an explanatory view of a maximum retarded valve opening timing of the exhaust valve which is set in the embodiment of the present invention.

### DESCRIPTION OF EMBODIMENTS

Hereinafter, an engine control device according to an embodiment of the present invention is described with reference to attached drawings.

### [Configuration of engine]

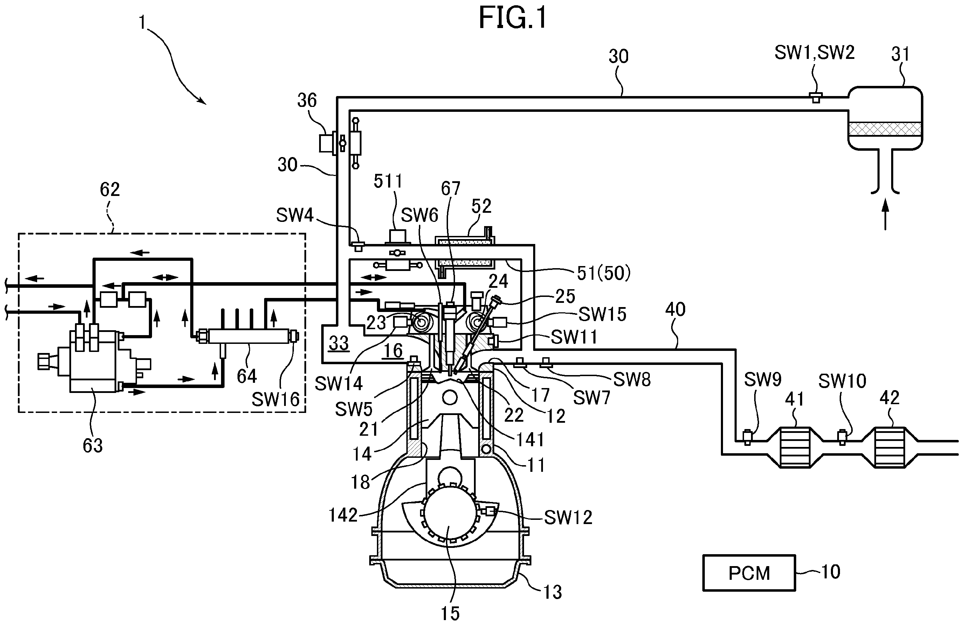

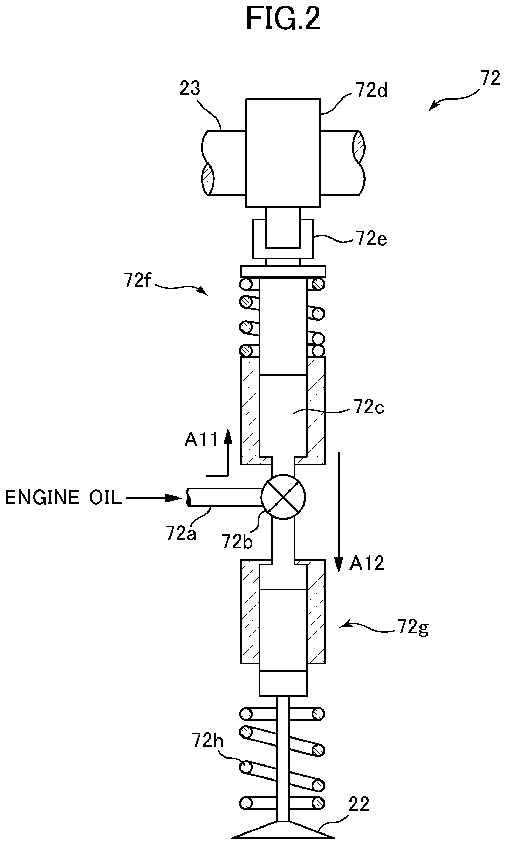

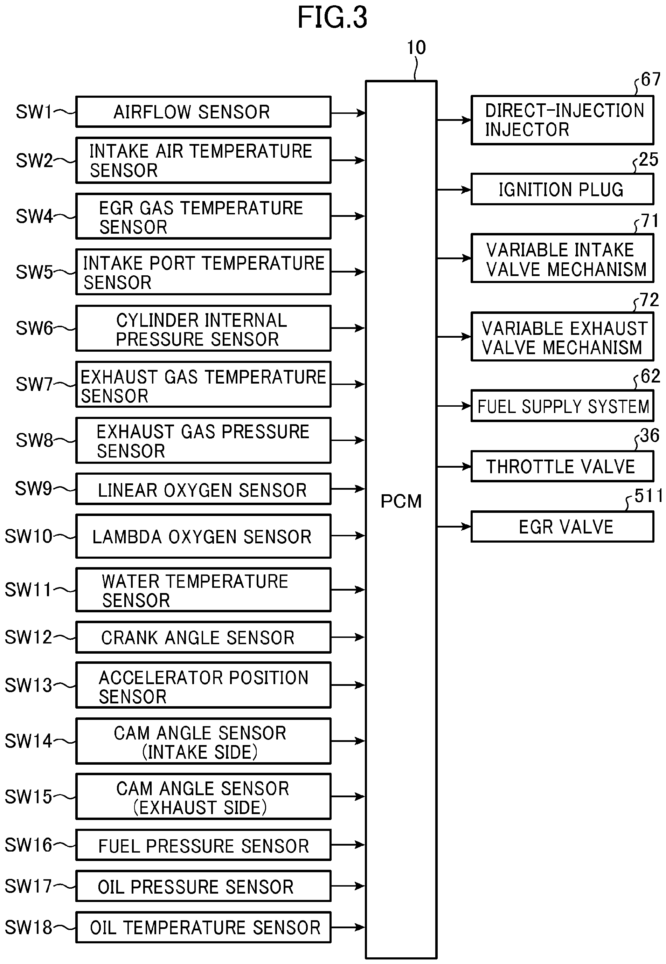

First, a configuration of an engine to which an engine control device according to an embodiment of the present invention is applied is described with reference to FIG. 1 to FIG. 3. FIG. 1 is a schematic configuration diagram of the engine to which the engine control device according to the embodiment of the present invention is applied. FIG. 2 is a schematic side view (partially being a cross-sectional view) of a variable exhaust valve mechanism which is applied to an exhaust valve of the engine according to the embodiment of the present invention. FIG. 3 is a block diagram showing an electrical configuration for the engine control device according to the embodiment of the present invention.

As shown in FIG. 1, an engine 1 is a gasoline engine which is mounted on a vehicle, and to which a fuel containing at least gasoline is supplied. The engine 1 includes: a cylinder block 11 having a plurality of cylinders 18 (only one cylinder is shown in FIG. 1, whereas four cylinders are provided in series, for example); a cylinder head 12 disposed on the cylinder block 11; and an oil pan 13 which is disposed below the cylinder block 11, and in which a lubricating oil is stored. A piston 14 is fitted and inserted into each cylinder 18 in a reciprocable manner, and the piston 14 is connected to a crankshaft 15 by way of a connecting rod 142. A cavity 141, which is of a similar type to a reentrant cavity in a diesel engine, is formed on a top surface of the piston 14. The cavity 141 opposedly faces an injector 67 described later when the piston 14 is positioned in the vicinity of the compression top dead center. The cylinder head 12, the cylinder 18, and the piston 14 having the cavity 141 define a combustion chamber 19. The shape of the combustion chamber 19 is not limited to the shape illustrated in the drawing. For example, the shape of the cavity 141, the shape of each top surface of the piston 14, the shape of a ceiling portion of each combustion chamber 19 or the like may be suitably changed.

In the engine 1, a geometric compression ratio is set to a relatively high value of 15 or more so as to enhance theoretical thermal efficiency and to stabilize compression ignition combustion described later. The geometric compression ratio may be suitably set to a value which falls within a range of approximately 15 or more and 20 or less.

The cylinder head 12 has intake ports 16 and exhaust ports 17 which are formed for each cylinder 18. An intake valve 21 and an exhaust valve 22 which open and close openings on the combustion chamber 19 side are respectively disposed on each intake port 16 and each exhaust port 17. As shown in FIG. 3, a valve opening timing and/or the lift amount of the intake valves 21 is varied by a variable intake valve mechanism 71, and a valve opening timing of the exhaust valves 22 is varied by a variable exhaust valve mechanism 72. In general, two exhaust valves 22 are provided for each cylinder 18. However, it is not limited to the configuration where the variable exhaust valve mechanism 72 is applied to both of the two exhaust valves 22. A configuration may be adopted where the variable exhaust valve mechanism 72 is applied only to one exhaust valve 22, and a mechanical valve mechanism by which a valve opening timing and a lift amount are set constant is applied to the other exhaust valve 22. The same applies for the intake valve 21.

As shown in FIG. 2, the variable exhaust valve mechanism 72 which is applied to the exhaust valve 22 has: an oil supply passage 72a; a solenoid valve 72b (corresponding to a hydraulic valve); and a pressure chamber 72c. An engine oil supplied from the outside passes through the oil supply passage 72a. The solenoid valve 72b is provided to the oil supply passage 72a, and functions as a three-way valve. The pressure chamber 72c is filled with the engine oil supplied through the oil supply passage 72a via the solenoid valve 72b. In this case, when the solenoid valve 72b is opened, fluid communication is allowed between the oil supply passage 72a and the pressure chamber 72c so that engine oil is supplied from the oil supply passage 72a to the pressure chamber 72c (see arrow A11 in FIG. 2). The solenoid valve 72b is opened when the solenoid valve 72b is in a non-energized state. The solenoid valve 72b is closed when the solenoid valve 72b is in an energized state. To be more specific, when the solenoid valve 72b is continuously energized, a valve closed state is maintained. A check valve and the like not shown in the drawing are provided to the oil supply passage 72a on the upstream side of the solenoid valve 72b.

The variable exhaust valve mechanism 72 includes a cam 72d, a roller finger follower 72e, and a pump unit 72f. The cam 72d is mounted on an exhaust cam shaft 23 to which rotation of the crankshaft 15 is transmitted through a timing belt or the like. The roller finger follower 72e swings due to a force transmitted from the cam 72d. The pump unit 72f is connected to the pressure chamber 72c, and is caused to move by the roller finger follower 72e thus increasing the pressure of engine oil (oil pressure) in the pressure chamber 72c. In addition, the variable exhaust valve mechanism 72 also includes a brake unit 72g and a valve spring 72h. The brake unit 72g is connected to the pressure chamber 72c via the solenoid valve 72b, and is moved by the oil pressure in the pressure chamber 72c so as to open the exhaust valve 22. The valve spring 72h applies a force for maintaining a closed state of the exhaust valve 22 when the brake unit 72g is not in motion. In this case, when the solenoid valve 72b is closed, fluid communication between the oil supply passage 72a and the pressure chamber 72c is blocked while fluid communication between the pressure chamber 72c and the brake unit 72g is allowed so that oil pressure in the pressure chamber 72c acts on the brake unit 72g (see arrow A12 in FIG. 2).

The motion of the variable exhaust valve mechanism 72 for opening the exhaust valve 22 is specifically described. When a cam crest (in other words, cam lobe) formed on the cam 72d comes into contact with the roller finger follower 72e during the rotation of the cam 72d in synchronization with the exhaust cam shaft 23, the cam crest pushes against the roller finger follower 72e. With such an operation, the roller finger follower 72e biases the pump unit 72f so that the pump unit 72f moves to compress engine oil in the pressure chamber 72c. At this time of operation, when the solenoid valve 72b is closed, fluid communication between the oil supply passage 72a and the pressure chamber 72c is blocked thus allowing fluid communication between the pressure chamber 72c and the brake unit 72g. Accordingly, a substantially sealed space is formed by the pressure chamber 72c and the brake unit 72g, and oil pressure of engine oil in the space increases due to the motion of the pump unit 72f. The increased oil pressure causes the brake unit 72g to move thus biasing the exhaust valve 22 so that the exhaust valve 22 is lifted, that is, the exhaust valve 22 is opened. On the other hand, assume a case where the solenoid valve 72b is maintained in an open state in the above-mentioned situation. In such a case, fluid communication between the oil supply passage 72a and the pressure chamber 72c is allowed and hence, due to the motion of the pump unit 72f, engine oil in the pressure chamber 72c is expelled to the oil supply passage 72a (as a matter of course, when the solenoid valve 72b is closed, fluid communication between the pressure chamber 72c and the brake unit 72g is blocked and hence, oil pressure in the pressure chamber 72c does not act on the brake unit 72g).

Basically, closing the solenoid valve 72b at any timing during the period while the cam crest formed on the cam 72d acts on the roller finger follower 72e allows the exhaust valve 22 to be opened. Accordingly, varying the timing at which the solenoid valve 72b is switched from an open state to a closed state allows the valve opening timing of the exhaust valve 22 to be varied. In this embodiment, the cam crest is formed on the cam 72d at a predetermined position so as to allow the exhaust valve 22 to be opened in an exhaust stroke. At the same time, another cam crest is formed on the cam 72d at a predetermined position so as to allow the exhaust valve 22 to also be opened in an intake stroke in addition to the exhaust stroke, that is, so as to allow the exhaust valve 22 to be opened twice. In this embodiment, control for switching the solenoid valve 72b between the open state and the closed state is performed within a period of time that each of these two cam crests acts on the roller finger follower 72e so as to vary an opening and closing timing of the exhaust valve 22. Further, the exhaust valve is opened twice when burned gas (internal EGR gas) is caused to backflow thus being introduced into the combustion chamber 19 again from the exhaust port 17.

Referring to FIG. 1 again, the (direct-injection) injectors 67, each of which directly injects fuel into the cylinder 18, are mounted on the cylinder head 12. An injector 67 is provided for each cylinder 18. Each injector 67 is disposed such that a nozzle hole of the injector 67 faces the inside of the combustion chamber 19 from a center portion of a ceiling surface of the combustion chamber 19. The injector 67 directly injects fuel into the combustion chamber 19 at an injection timing which is set corresponding to an operation state of the engine 1, and by an amount corresponding to the operation state of the engine 1. In this embodiment, although the detailed illustration of the injector 67 is omitted, the injector 67 is formed of a multi-nozzle hole type injector having a plurality of nozzle holes. Accordingly, the injector 67 injects fuel such that fuel spray radially spread from the center position of the combustion chamber 19. At the timing that the piston 14 is positioned in the vicinity of the compression top dead center, fuel spray is injected so as to radially spread from the center portion of the combustion chamber 19, and the fuel spray flows along a wall surface of the cavity 141 formed on the top surface of the piston. In other words, the cavity 141 is formed so as to store the fuel spray injected at the timing that the piston 14 is positioned in the vicinity of the compression top dead center. The combination of the multi-nozzle hole type injector 67 and the cavity 141 is a configuration which is advantageous in shortening an air-fuel mixture forming period after fuel is injected and, at the same time, is also advantageous in shortening a combustion period. The injector 67 is not limited to a multi-nozzle hole type injector. An injector of an outward opening valve type may be adopted.

A fuel tank not shown in the drawing and the injector 67 are connected to each other by a fuel supply passage. A fuel supply system 62 is provided to the fuel supply passage. The fuel supply system 62 includes a fuel pump 63 and a common rail 64, and can supply fuel to the injector 67 at relatively high fuel pressure. The fuel pump 63 pumps fuel from the fuel tank to the common rail 64. The common rail 64 can store the pumped fuel at relatively high fuel pressure. Opening the injector 67 allows fuel stored in the common rail 64 to be injected from the nozzle holes of the injector 67. In this embodiment, although not shown in the drawing, the fuel pump 63 is a plunger pump, and is driven by the engine 1. The fuel supply system 62 which includes the pump driven by the engine allows a fuel with fuel pressure of 30 MPa or more to be supplied to the injector 67. Fuel pressure may be set to approximately 120 MPa at maximum. A pressure of fuel to be supplied to the injector 67 is changed according to an operation state of the engine 1. The fuel supply system 62 is not limited to such a configuration.

Ignition plugs 25 are also mounted on the cylinder head 12, and each ignition plug 25 performs forced ignition (to be more specific, spark ignition) of air-fuel mixture in the combustion chamber 19. In this embodiment, the ignition plug 25 is disposed so as to penetrate the inside of the cylinder head 12 such that the ignition plug 25 extends obliquely downward from the exhaust side of the engine 1. A distal end of the ignition plug 25 is disposed so as to face the inside of the cavity 141 of the piston 14 positioned at the compression top dead center.

As shown in FIG. 1, an intake passage 30 is coupled to one side surface of the engine 1 so as to communicate with the intake ports 16 of the respective cylinders 18. On the other hand, an exhaust passage 40 is coupled to the other side surface of the engine 1, and burned gas (exhaust gas) from the combustion chamber 19 in each cylinder 18 is discharged through the exhaust passage 40.

An air cleaner 31 which filters intake air is disposed at an upstream end portion of the intake passage 30. A throttle valve 36 which regulates the amount of intake air taken into the respective cylinders 18 is disposed on the downstream side of the air cleaner 31. A surge tank 33 is disposed in the vicinity of a downstream end of the intake passage 30. A portion of the intake passage 30 disposed on the downstream side of the surge tank 33 is branched to the respective cylinders 18 thus forming independent passages. Downstream ends of the respective independent passages are coupled to the intake ports 16 of the respective cylinders 18.

An upstream side portion of the exhaust passage 40 is formed of an exhaust manifold. The manifold includes: independent passages which are branched to the respective cylinders 18, and are coupled to outer ends of the exhaust ports 17; and a gathering portion where the respective independent passages are joined together. A direct catalyst 41 and an underfoot catalyst 42 are respectively coupled to the exhaust passage 40 on the downstream side of the exhaust manifold. The direct catalyst 41 and the underfoot catalyst 42 form an exhaust emission control device which eliminates harmful components in exhaust gas. Each of the direct catalyst 41 and the underfoot catalyst 42 is formed of a cylindrical casing and a three-way catalyst disposed in a flow passage in the casing, for example.

A portion of the intake passage 30 between the surge tank 33 and the throttle valve 36 and a portion of the exhaust passage 40 disposed on the upstream side of the direct catalyst 41 are coupled to each other through an EGR passage 50 for returning a portion of exhaust gas to the intake passage 30. The EGR passage 50 includes a main passage 51 which is provided with an EGR cooler 52 for cooling exhaust gas using engine cooling water. The main passage 51 is provided with an EGR valve 511 which adjusts the amount of exhaust gas to be returned to the intake passage 30.

The engine 1 is controlled by a powertrain control module (hereinafter referred to as "PCM") 10 forming a control device. The PCM 10 is formed of a micro processing unit which includes a CPU, a memory, a group of counter timers, an interface, and a path which couples these units. The PCM 10 forms a controller.

As shown in FIG. 1 and FIG. 3, detection signals of various sensors SW1, SW2, SW4 to SW18 are inputted into the PCM 10. To be more specific, inputted into the PCM 10 are the detection signal of the airflow sensor SW1, the detection signal of the intake air temperature sensor SW2, the detection signal of the EGR gas temperature sensor SW4, the detection signal of the intake port temperature sensor SW5, the detection signal of the cylinder internal pressure sensor SW6, the detection signals of the exhaust gas temperature sensor SW7 and the exhaust gas pressure sensor SW8, the detection signal of the linear oxygen sensor SW9, the detection signal of the lambda oxygen sensor SW10, the detection signal of the water temperature sensor SW11, the detection signal of the crank angle sensor SW12, the detection signal of the accelerator position sensor SW13, the detection signals of the cam angle sensors SW14, SW15 disposed on the intake side and the exhaust side, the detection signal of the fuel pressure sensor SW16, the detection signal of the oil pressure sensor SW17, and the detection signal of the oil temperature sensor SW18. The airflow sensor SW1 detects a flow rate of new air on the downstream side of the air cleaner 31. The intake air temperature sensor SW2 detects a temperature of new air on the downstream side of the air cleaner 31. The EGR gas temperature sensor SW4 is disposed on the EGR passage 50 at a position in the vicinity of a portion coupled to the intake passage 30, and detects a temperature of external EGR gas. The intake port temperature sensor SW5 is mounted on the intake port 16, and detects a temperature of intake air which is immediately before flowing into the cylinder 18. The cylinder internal pressure sensor SW6 is mounted on the cylinder head 12, and detects a pressure in the cylinder 18. The exhaust gas temperature sensor SW7 and the exhaust gas pressure sensor SW8 are disposed on the exhaust passage 40 at positions in the vicinity of a portion coupled to the EGR passage 50. The exhaust gas temperature sensor SW7 detects a temperature of exhaust gas. The exhaust gas pressure sensor SW8 detects pressure of exhaust gas. The linear oxygen sensor SW9 is disposed on the upstream side of the direct catalyst 41, and detects an oxygen concentration in exhaust gas. The lambda oxygen sensor SW10 is disposed between the direct catalyst 41 and the underfoot catalyst 42, and detects an oxygen concentration in exhaust gas. The water temperature sensor SW11 detects a temperature of engine cooling water. The crank angle sensor SW12 detects a rotation angle of the crankshaft 15. The accelerator position sensor SW13 detects an accelerator position which corresponds to a manipulation amount of an accelerator pedal (not shown in the drawing) of a vehicle. The fuel pressure sensor SW16 is mounted on the common rail 64 of the fuel supply system 62, and detects pressure of fuel to be supplied to the injector 67. The oil pressure sensor SW17 detects oil pressure of the engine 1. The oil temperature sensor SW18 detects an oil temperature of the engine 1.

The PCM 10 performs various calculations based on these detection signals thus determining a state of the engine 1 and a state of a vehicle. According to such states, the PCM 10 outputs control signals to the (direct-injection) injectors 67, the ignition plugs 25, the variable intake valve mechanism 71, the variable exhaust valve mechanism 72, the fuel supply system 62, and actuators of various valves (the throttle valve 36, the EGR valve 511). The PCM 10 operates the engine 1 in this manner. Particularly, in this embodiment, the PCM 10 outputs a control signal to the solenoid valve 72b of the variable exhaust valve mechanism 72 (to be more specific, the PCM 10 supplies a voltage or an electric current to the solenoid valve 72b) so as to switch the solenoid valve 72b between the open state and the closed state thus performing a control for varying an opening and closing timing of the exhaust valve 22.

### [Operation region]

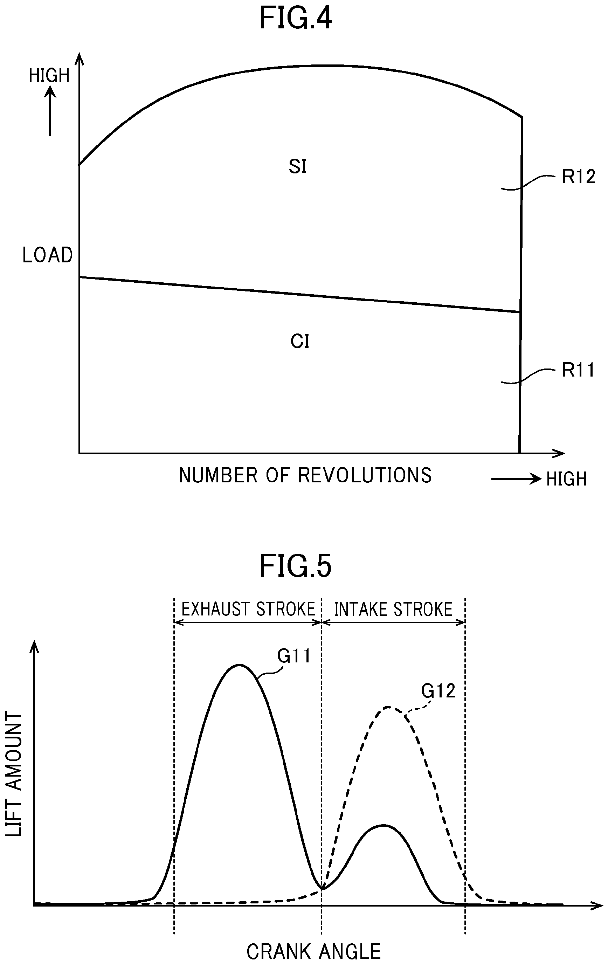

Next, an operation region of the engine 1 according to the embodiment of the present invention is described with reference to FIG. 4. FIG. 4 shows one example of an operation control map for the engine 1. To enhance fuel economy and to enhance exhaust emission performance, the engine 1 does not perform ignition using the ignition plug 25, but performs compression ignition combustion caused by compression self-ignition in a first operation region R11 which is a low load region where an engine load is relatively low. However, an increase in the load of the engine 1 causes the compression ignition combustion to be performed excessively rapidly so that there may be a case where combustion noise is generated, or a control of an ignition timing becomes difficult (misfire or the like tends to occur). Accordingly, in the engine 1, in a second operation region R12 which is a high load region where an engine load is relatively high, forced ignition combustion (spark ignition combustion in this embodiment) is performed which makes use of the ignition plug 25 instead of performing compression ignition combustion. As described above, the engine 1 is configured to switch a CI (Compression Ignition) operation, where an operation is performed by compression ignition combustion, and an SI (Spark Ignition) operation, where an operation is performed by spark ignition combustion, according to an operation state of the engine 1, particularly to a load of the engine 1.

A basic motion of the intake valve 21 and the exhaust valve 22 in the first operation region R11, where the CI operation is performed, is described with reference to FIG. 5. In FIG. 5, a crank angle is taken on an axis of abscissas, and the lift amount of a valve is taken on an axis of ordinates. Further, a graph G11 shown by a solid line indicates motion (lift curve) of the exhaust valve 22 which corresponds to a crank angle. A graph G12 shown by a broken line indicates motion (lift curve) of the intake valve 21 which corresponds to a crank angle. As shown by the graph G11, in the first operation region R11 where the CI operation is performed, the exhaust valve is opened twice such that the variable exhaust valve mechanism 72 causes the exhaust valve 22 to be opened in the exhaust stroke, and to be opened also in the intake stroke thus introducing internal EGR gas having a relatively high temperature into the cylinder 18. With such operations, compression end temperature in the cylinder 18 can be increased during the CI operation thus improving ignitability and stability in compression ignition combustion.

### [Control of exhaust valve]

Next, control contents with respect to the exhaust valve according to the embodiment of the present invention are specifically described.

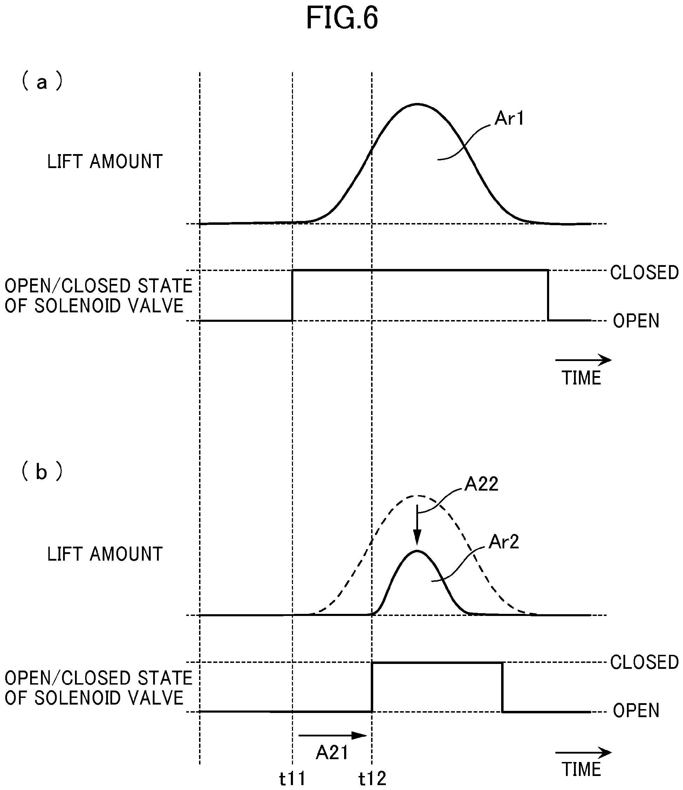

First, characteristics of the variable exhaust valve mechanism 72 which causes the exhaust valve 22 to move are described with reference to FIG. 6. In this embodiment, for the sake of simplifying the description, the case where the exhaust valve 22 is opened only once by the variable exhaust valve mechanism 72 is taken as an example (in an actual operation, the exhaust valve 22 is opened twice).

Motion (lift curve) of the exhaust valve 22 when the exhaust valve 22 is opened by the variable exhaust valve mechanism 72 at a relatively early timing t11 is shown on the upper side of chart (a) in FIG. 6. An open/closed state of the solenoid valve 72b of the variable exhaust valve mechanism 72 when the exhaust valve 22 is caused to move as described above is shown on the lower side of chart (a) in FIG. 6. For example, the valve opening timing t11 is a valve opening timing when a valve opening timing of the exhaust valve 22 is advanced to the maximum by the variable exhaust valve mechanism 72 (hereinafter referred to as "maximum advanced valve opening timing" when appropriate). On the other hand, motion (lift curve) of the exhaust valve 22 when the exhaust valve 22 is opened by the variable exhaust valve mechanism 72 at a relatively later timing t12, to be more specific, at the timing t12 which is retarded from the valve opening timing t11 shown in chart (a) in FIG. 6 (see arrow A21) is shown on the upper side of chart (b) in FIG. 6. An open/closed state of the solenoid valve 72b of the variable exhaust valve mechanism 72 when the exhaust valve 22 is caused to move as described above is shown on the lower side of chart (b) in FIG. 6. For the purpose of comparison, the lift curve shown on the upper side of chart (a) is also shown in chart (b) by a broken line in an overlapping manner.

By comparing chart (a) and chart (b) in FIG. 6 to each other, it can be seen that the lift amount of the exhaust valve 22 is reduced when the valve opening timing of the exhaust valve 22 is retarded (see arrow A22). It can be also seen that a lift amount integrated value of the exhaust valve 22 which corresponds to an area indicated by reference character Ar2 is smaller than a lift amount integrated value of the exhaust valve 22 which corresponds to an area indicated by reference character Ar1. (The lift amount integrated value of the exhaust valve 22 is a value obtained by integrating the lift amount of the exhaust valve 22 which varies corresponding to a crank angle during a valve opening period. When the engine rotates at high rpm, the amount of gas which flows through the exhaust valve 22 substantially assumes an amount which corresponds to the lift amount integrated value. Assume the case where the engine rotates at low rpm, and the amount of gas which flows through the exhaust valve 22 is equal to that at high rpm. In such a case, pumping loss substantially increases with the lowering of a lift amount integrated value.) The reason why a lift amount and a lift amount integrated value are reduce when the valve opening timing of the exhaust valve 22 is retarded as described above is as follows.

As described above, in the variable exhaust valve mechanism 72, the cam crest formed on the cam 72d pushes against the roller finger follower 72e when the cam crest is in contact with the roller finger follower 72e. Accordingly, the pump unit 72f moves to compress engine oil in the pressure chamber 72c. At this time of operation, when the solenoid valve 72b is closed, a substantially sealed space is formed by the pressure chamber 72c and the brake unit 72g, and oil pressure of engine oil in such a space increases. The increased oil pressure causes the brake unit 72g to move thus biasing the exhaust valve 22 so that the exhaust valve 22 is opened.

Oil pressure in the pressure chamber 72c increases when the cam crest of the cam 72d starts to act on the roller finger follower 72e. However, after the oil pressure increases to an extent, the oil pressure decreases. Accordingly, when the solenoid valve 72b is closed at a predetermined timing at an early stage where the cam crest of the cam 72d starts to act on the roller finger follower 72e, a pressure in the high pressure chamber increases from a relatively early timing. Therefore, the exhaust valve 22 is opened at the early stage and, after the exhaust valve 22 is opened, the exhaust valve 22 lifts following a movement of the pump unit 72f which is pushed by the cam crest so that a lift amount and a lift amount integrated value respectively assume a maximum value (see chart (a) in FIG. 6). In this case, a valve opening timing of the exhaust valve 22, at which the lift amount and the lift amount integrated value of the exhaust valve 22 respectively assume a maximum value, is defined as a maximum advanced valve opening timing of the exhaust valve 22. On the other hand, when a closing timing of the solenoid valve 72b is retarded from such a maximum advanced valve opening timing, an increase in pressure in the high pressure chamber is relatively delayed so that opening of the exhaust valve 22 is delayed. Accordingly, after the exhaust valve 22 is opened, the lift amount of the exhaust valve 22 which lifts following a movement of the pump unit which is pushed by the cam crest and a lift amount integrated value are also reduced (see chart (b) in FIG. 6).

As described above, the variable exhaust valve mechanism 72 can vary an opening and closing timing of the exhaust valve 22. As shown in Figure 6, when the variable exhaust valve mechanism 72 varies an opening and closing timing of the exhaust valve 22, the lift amount of the exhaust valve 22 is also varied. Accordingly, it can be said that the variable exhaust valve mechanism 72 can also vary a lift amount in addition to an opening and closing timing of the exhaust valve 22.

It can be considered that when the engine 1 rotates at high rpm, causing a valve opening timing of the exhaust valve 22 to be advanced by the variable exhaust valve mechanism 72 with respect to the exhaust bottom dead center (TDC) can reduce pumping loss. For example, setting the valve opening timing of the exhaust valve 22 at a maximum advanced valve opening timing can effectively reduce pumping loss. On the other hand, it can be considered that when the engine 1 rotates at low rpm, causing the valve opening timing of the exhaust valve 22 to be retarded to a vicinity of the exhaust bottom dead center by the variable exhaust valve mechanism 72 can enhance an expansion ratio. Accordingly, in this embodiment, the PCM 10 causes the valve opening timing of the exhaust valve 22 to be varied by the variable exhaust valve mechanism 72 corresponding to engine speed. To be more specific, from the viewpoint of pumping loss, the higher the engine speed, the more the PCM 10 causes the valve opening timing of the exhaust valve 22 to be advanced by the variable exhaust valve mechanism 72 (to be more specific, the valve opening timing of the exhaust valve 22 is advanced using a maximum advanced valve opening timing as a limitation). Further, from a viewpoint of an expansion ratio, the lower the engine speed, the more the PCM 10 causes the valve opening timing of the exhaust valve 22 to be retarded by the variable exhaust valve mechanism 72.

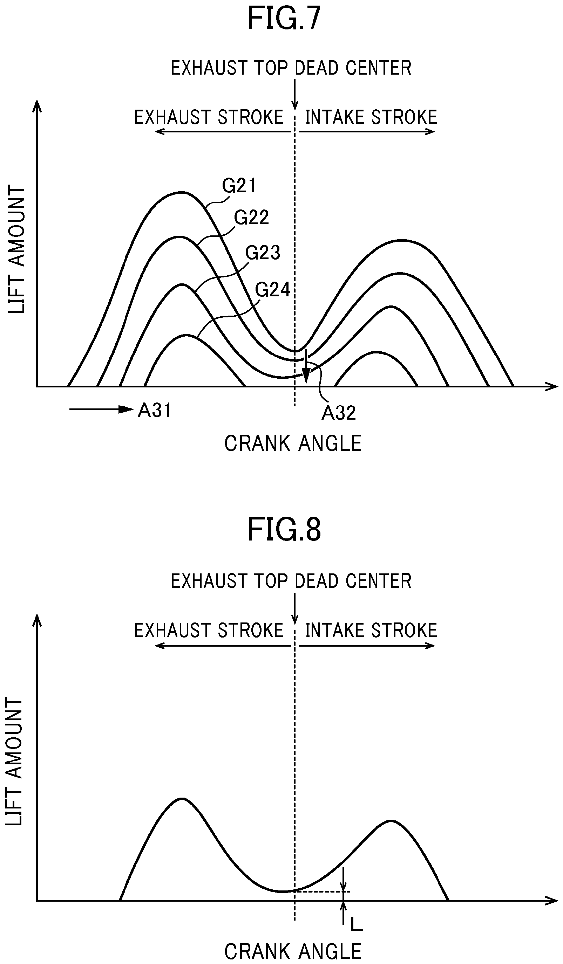

However, due to the above-mentioned characteristics of the variable exhaust valve mechanism 72 (see chart (b) in FIG. 6), when the valve opening timing of the exhaust valve 22 is excessively retarded so as to enhance an expansion ratio in a state where the engine 1 rotates at low rpm, a desired lift amount and the like cannot be ensured so that exhaust gas is prevented from being smoothly discharged from the cylinder. Particularly, when the valve opening timing of the exhaust valve 22 is excessively retarded, the lift amount of the exhaust valve 22 at the exhaust top dead center is remarkably reduced so that loss (pumping loss) caused by exhaust gas occurs. The occurrence of the pumping loss is specifically described with reference to FIG. 7.

FIG. 7 is an explanatory view for describing variation in the lift amount of the exhaust valve 22 at the exhaust top dead center when the valve opening timing of the exhaust valve 22 is retarded by the variable exhaust valve mechanism 72. In FIG. 7, a crank angle is taken on an axis of abscissas, and the lift amount of the exhaust valve 22 is taken on an axis of ordinates. Basically, the exhaust valve 22 is caused to move such that the exhaust valve is opened twice (see FIG. 5). Graphs G21 to G24 show specific examples of lift curves of the exhaust valve 22 in the exhaust stroke in the case where the valve opening timing of the exhaust valve 22 is retarded.

As shown in FIG. 7, it can be seen that when the degree of retardation of the valve opening timing of the exhaust valve 22 is increased (see arrow A31), the lift amount of the exhaust valve 22 at the exhaust top dead center is reduced (see arrow A32). Particularly, as shown by a graph G24, it can be seen that when the degree of retardation of the valve opening timing of the exhaust valve 22 is remarkably increased, the lift amount of the exhaust valve 22 at the exhaust top dead center becomes zero, that is, the exhaust valve 22 assumes a fully closed state at the exhaust top dead center. As described above, when retarding the valve opening timing of the exhaust valve 22 prevents the lift amount of the exhaust valve 22 at the exhaust top dead center from being ensured, exhaust gas is not appropriately discharged from the cylinder thus increasing an internal pressure of the cylinder so that loss caused by exhaust gas occurs.

Accordingly, in this embodiment, by taking into account the lift amount of the exhaust valve 22 at the exhaust top dead center, a maximum retarded valve opening timing is set which is a timing at which the valve opening timing of the exhaust valve 22 in the exhaust stroke is retarded to a maximum by the variable exhaust valve mechanism 72. The variable exhaust valve mechanism 72 is controlled so as to cause the exhaust valve 22 to be opened at a timing on the advanced side of the maximum retarded valve opening timing. To be more specific, when engine speed is low, the PCM 10 causes the valve opening timing of the exhaust valve 22 to be retarded using the maximum retarded valve opening timing as a limitation. Accordingly, the lift amount of the exhaust valve 22 at the exhaust top dead center is ensured thus suppressing loss caused by exhaust gas, and an expansion ratio is improved.

Next, the maximum retarded valve opening timing of the exhaust valve 22 which is set in the embodiment of the present invention is specifically described with reference to FIG. 8. FIG. 8 shows one example of a lift curve of the exhaust valve 22 when the exhaust valve 22 is caused to move such that the exhaust valve is opened twice. Reference character L in FIG. 8 indicates the lift amount of the exhaust valve 22 at the exhaust top dead center.

In this embodiment, the PCM 10 sets the maximum retarded valve opening timing of the exhaust valve 22 retarded by the variable exhaust valve mechanism 72 such that the lift amount L of the exhaust valve 22 at the exhaust top dead center is prevented from becoming zero, that is, the exhaust valve 22 assumes at least an open state at the exhaust top dead center. It is preferable that the PCM 10 set the maximum retarded valve opening timing of the exhaust valve 22 retarded by the variable exhaust valve mechanism 72 such that the lift amount L of the exhaust valve 22 at the exhaust top dead center assumes a predetermined amount or more. An amount larger than at least the lift amount L of the exhaust valve 22 by which loss (pumping loss) which is not acceptable occurs is adopted as a predetermined amount which is used in this case, for example. In other words, the lift amount L of the exhaust valve 22 by which loss (pumping loss) within an allowable range occurs is adopted. The predetermined amount is set based on a displacement, an opening area of the exhaust valve 22 and the like.

A maximum retarded valve opening timing at which a lift amount L assumes a value larger than at least zero, and a maximum retarded valve opening timing at which a lift amount L assumes a predetermined amount or more can be obtained by performing experiments, simulations or the like in advance, for example. Using a maximum retarded valve opening timing obtained in such a manner, the PCM 10 controls the variable exhaust valve mechanism 72 so as to cause the exhaust valve 22 to be opened at the timing on the advanced side of the maximum retarded valve opening timing.

On the other hand, the higher the engine speed, the more the amount of exhaust gas generated in the cylinder 18 increases. Accordingly, it is desirable to further increase the lift amount L of the exhaust valve 22 which is required to be ensured at the exhaust top dead center. Therefore, in this embodiment, the PCM 10 sets the maximum retarded valve opening timing of the exhaust valve 22 retarded by the variable exhaust valve mechanism 72 more toward the advanced side as engine speed increases so as to increase the lift amount of the exhaust valve 22 at the exhaust top dead center. For example, maximum retarded valve opening timings to be set corresponding to engine speeds are obtained by performing experiments, simulations or the like, and the maximum retarded valve opening timings to be set corresponding to the engine speeds are designated in a map. The PCM 10 sets a maximum retarded valve opening timing corresponding to engine speed while referencing such a map.

### [Functions/Advantageous Effects]

Next, the manner of operation and advantageous effects of the engine control device according to the embodiment of the present invention is described.

According to this embodiment, the maximum retarded valve opening timing of the exhaust valve 22 is set based on the lift amount of the exhaust valve 22 at the exhaust top dead center, and the variable exhaust valve mechanism 72 is controlled so as to cause the exhaust valve 22 to be opened at a timing on the advanced side of the maximum retarded valve opening timing. Accordingly, the lift amount of the exhaust valve 22 at the exhaust top dead center can be appropriately ensured and hence, loss caused by exhaust gas can be suppressed. Therefore, when engine speed is low, the valve opening timing of the exhaust valve 22 can be retarded using an appropriate maximum retarded valve opening timing as a limitation. For this reason, the lift amount of the exhaust valve 22 at the exhaust top dead center can be ensured thus suppressing loss caused by exhaust gas, and an expansion ratio can be improved.

Particularly, in this embodiment, the maximum retarded valve opening timing of the exhaust valve 22 is set such that the lift amount of the exhaust valve 22 at the exhaust top dead center is prevented from becoming zero. Accordingly, the lift amount of the exhaust valve 22 at the exhaust top dead center can be reliably ensured. Further, the maximum retarded valve opening timing of the exhaust valve 22 is set such that the lift amount of the exhaust valve 22 at the exhaust top dead center assumes a predetermined amount or more. By setting the maximum retarded valve opening timing of the exhaust valve 22 as described above, the lift amount of the exhaust valve 22 at the exhaust top dead center can be more reliably ensured so that loss caused by exhaust gas can be effectively suppressed.

Further, according to this embodiment, the maximum retarded valve opening timing of the exhaust valve 22 is set more toward the advanced side as engine speed increases so as to increase the lift amount of the exhaust valve 22 at the exhaust top dead center. Accordingly, exhaust gas which is increased in amount with an increase in engine speed can be appropriately discharged from the exhaust valve 22 and hence, loss caused by exhaust gas can be suppressed.

### [Modification]

In the above-mentioned embodiment, the description has been made with respect to the case where the present invention is applied to a gasoline engine where operation is performed while switching between a CI operation and an SI operation. However, application of the present invention is not limited to such a case. The present invention is also applicable to a general gasoline engine (that is, an engine which performs only SI operation) or a diesel engine.

### LIST OF REFERENCE SIGNS

- 1: engine
- 10: PCM
- 18: cylinder
- 21: intake valve
- 22: exhaust valve
- 25: ignition plug
- 67: injector
- 71: variable intake valve mechanism
- 72: variable exhaust valve mechanism
- 72b: solenoid valve
- 72c: pressure chamber
- 72d: cam

## Claims

1. An engine control device having a cylinder provided with an intake valve for introducing an intake gas into the cylinder, and an exhaust valve for discharging exhaust gas from the cylinder, the engine control device comprising:
a variable valve mechanism configured to move the exhaust valve, and to vary an opening and closing timing of the exhaust valve; and
a control device configured to control the variable valve mechanism such that the opening and closing timing of the exhaust valve is varied,
wherein the variable valve mechanism is configured such that a lift amount of the exhaust valve becomes smaller as a retarded degree of the valve opening timing of the exhaust valve with respect to a predetermined reference timing increases, and
wherein the control device is configured, based on a lift amount of the exhaust valve at an exhaust top dead center, to set a maximum retarded valve opening timing which is a timing at which the valve opening timing of the exhaust valve in an exhaust stroke is retarded to a maximum by the variable valve mechanism, and to control the variable valve mechanism so as to open the exhaust valve in advance of the maximum retarded valve opening timing.

2. The engine control device according to claim 1, wherein the control device is configured to set the maximum retarded valve opening timing such that the lift amount of the exhaust valve at the exhaust top dead center does not become zero.

3. The engine control device according to claim 1, wherein the control device is configured to set the maximum retarded valve opening timing such that the lift amount of the exhaust valve at the exhaust top dead center becomes a predetermined amount or more.

4. The engine control device according to any one of claims 1 to 3, wherein the control device is configured to advance the maximum retarded valve opening timing as engine speed increases.

5. The engine control device according to any one of claims 1 to 4, wherein the control device is configured to control the variable valve mechanism such that the valve opening timing of the exhaust valve is advanced as engine speed increases and the valve opening timing of the exhaust valve is retarded as engine speed decreases.

6. The engine control device according to any one of claims 1 to 5,
wherein the variable valve mechanism comprises:
a cam configured to rotate in synchronization with a rotation of a crankshaft;
a pressure chamber filled with an engine oil, an oil pressure of the engine oil in the pressure chamber varying with a motion of the cam; and
a hydraulic valve connected to the pressure chamber, an opening and closing of the hydraulic valve adjusting the oil pressure which acts on the exhaust valve,
wherein, when the cam operates so as to increase the oil pressure in the pressure chamber, the control device is configured to perform a control for switching the hydraulic valve between an open state and a closed state so as to cause the oil pressure in the pressure chamber to act on the exhaust valve and thereby to open the exhaust valve, and the control device is configured to control a timing at which the hydraulic valve is switched between the open state and the closed state and thereby to vary the opening and closing timing of the exhaust valve.
